(19) Europäisches Patentamt
European Patent Office
Office européen des brevets

(11) **EP 4 455 084 A1**

(12) **EUROPEAN PATENT APPLICATION**

(43) Date of publication:
**30.10.2024 Bulletin 2024/44**

(21) Application number: **23170107.9**

(22) Date of filing: **26.04.2023**

(51) International Patent Classification (IPC):
**C01B 32/05** $^{(2017.01)}$    **C01B 32/205** $^{(2017.01)}$
**C04B 11/028** $^{(2006.01)}$    **C10B 3/00** $^{(2006.01)}$
**F27B 1/10** $^{(2006.01)}$

(52) Cooperative Patent Classification (CPC):
**C01B 32/05; C01B 32/205; C04B 11/028;**
**F27B 1/10**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **SGL Carbon SE**
**65201 Wiesbaden (DE)**

(72) Inventors:
• **SCHREINER, Christian**
  **86405 Meitingen (DE)**
• **SCHREINER, Tino**
  **86405 Meitingen (DE)**
• **JOKANOVIC, Bojan**
  **86405 Meitingen (DE)**
• **KÜFNER, Alexander**
  **86405 Meitingen (DE)**
• **LOSHER, Richard**
  **86405 Meitingen (DE)**

(54) **GRAPHITIZATION FURNACE COMPRISING WIDENING CROSS-SECTION**

(57)    In a first aspect, the present disclosure relates to a graphitization furnace comprising a raw material inlet and a product outlet. Further, the graphitization furnace comprises a channel 100 connecting the raw material inlet and the product outlet, wherein the channel 100 comprises an upstream section 110 closer to the raw material inlet and a downstream section 120 closer to the product outlet. The upstream section 110 has a first cross-sectional area closer to the raw material inlet and second cross-sectional area closer to the product outlet and the downstream section 120 has a third cross-sectional area closer to the raw material inlet and fourth cross-sectional area closer to the product outlet. Herein, the second cross-sectional area section is larger than the first cross-sectional area and the fourth cross-sectional area is larger than the second and third cross-sectional area.

Figure 1

EP 4 455 084 A1

## Description

### Technical Field

The present invention relates to the field of graphitization furnaces. More specifically, the present invention relates to graphitization furnaces comprising a widening cross-section.

### Background

The most common commercially used anode material in lithium-ion batteries is graphite. The graphite can be lithiated to the state of $LiC_6$, which correlates to a theoretical maximal capacity of 372 mAh/g.

Artificial graphite may be produced by heating carbonaceous starting materials, such as coke and/or pitch, to temperatures of about 3000 °C under exclusion of oxygen. The heating may be performed in batch or continuous furnaces. In a continuous furnace, carbonaceous material is typically conveyed along a heated channel, transitioning to graphite while being conveyed.

The process of continuous graphitization may be advantageous because it may produce graphite more efficiently than a batch process and may allow for industrial scale production. However the inventors have found that some carbonaceous materials, in particular carbonaceous material in the form of powder, may have a tendency to cake in continuous furnaces. The caking may lead to an inhomogeneous temperature distribution, which in turn may result in a reduced product quality and consistency. It also may result in reduced process efficiency and higher production costs due to interruptions in the continuous process while resolving caking-induced channel blockage, as well as the need to re-process some products that have not been fully graphitized due to the caking.

In order to address the aforementioned issues, the inventors have developed a graphitization furnace.

### Summary

In a first aspect, the present disclosure relates to a graphitization furnace comprising a raw material inlet and a product outlet. The graphitization furnace comprises a channel connecting the raw material inlet and the product outlet, wherein the channel comprises an upstream and a downstream section. The upstream section has a first cross-sectional area closer to the raw material inlet and second cross-sectional area closer to the product outlet and the downstream section has a third cross-sectional area closer to the raw material inlet and fourth cross-sectional area closer to the product outlet. The second cross-sectional area section is larger than the first cross-sectional area and the fourth cross-sectional area is larger than the second and third cross-sectional area.

In some embodiments, the upstream section and the downstream section may be spaced apart or adjoining.

In some embodiments, between the upstream section and the downstream section an edge-like or arched transition feature may be disposed.

In some embodiments, the graphitization furnace may be a vertical graphitization furnace. In some embodiments, the graphitization furnace may be a vertical graphitization furnace and the downstream section may be provided in the lower third, the lower fourth, the lower fifth or the lower sixth of the channel, more specifically the lower fifth or lower sixth of the channel, and in particular in the lower fifth of the channel, wherein lower means closer to the gravitational center of the earth. In some embodiments, the upstream section may be provided in the lower half, the lower third, the lower fourth or the lower fifth of the channel, more specifically the lower fifth or lower sixth of the channel, and in particular in the lower fifth of the channel, wherein lower means closer to the gravitational center of the earth.

In some embodiments, the graphitization furnace may be a vertical graphitization furnace and the downstream section may be provided in the lower third, the lower fourth, the lower fifth or the lower sixth of the channel, more specifically the lower fifth or lower sixth of the channel, and in particular in the lower fifth of the channel; and the upstream section may be provided in the lower half, the lower third, the lower fourth or the lower fifth of the channel, more specifically the lower fifth or lower sixth of the channel, and in particular in the lower fifth of the channel, wherein lower means closer to the gravitational center of the earth.

In some embodiments, channel may comprise a heating zone, a high temperature reaction zone and a cooling zone.

In some embodiments, the downstream section may be disposed in the high temperature reaction zone and/or the cooling zone, in particular in the cooling zone.

In some embodiments, the upstream section may have a first length L1 and the downstream section may have a second length L2, more specifically the upstream section and the downstream section may be adjoining and the upstream section and downstream section may have a combined length L3, wherein the ratio L2/L3 may be smaller than 0.5, more specifically smaller than 0.3 and in particular smaller than 0.2.

In some embodiments, the ratio of L2/L3 may be between about 0.03 to about 0.5, more specifically 0.05 to about 0.3 and in particular between about 0.1 to about 0.2.

In some embodiments, the channel may have a first inner diameter D1, a second inner diameter D2, a third inner diameter D3 and a fourth inner diameter D4 in the plane of the first, second, third and fourth cross-sectional area respectively, and the inner diameters meet the requirement

$$\frac{(D2-D1)}{L1} < \frac{(D4-D3)}{L2}.$$

In some embodiments, the channel may have a first angle $\alpha_1$ defined as and meeting the criterion:

$$\alpha_1 = \arctan\left(\frac{D2-D1}{2*L1}\right)$$ and a second angle $\alpha_2$ defined as and meeting the criterion: $\alpha_2 = \arctan$ $\arctan\left(\frac{D4-D3}{2*L2}\right)$

and wherein $\alpha_1 < \alpha_2$.

In some embodiments, the first angle $\alpha_1$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1 to about 45°, more specifically between about 0.2°and 20° and in particular between about 0.3° to about 10°.

In some embodiments, it may be particularly advantageous that the first angle $\alpha_1$ may be less than 20°, 15°, 10°, 9°, 8°, 7°, 6°, 5°, 4°, 3°, 2° or 1°, in particular the first angle $\alpha_1$ may be between about 0.1 to about 20°, more specifically between about 0.2° and 10° and in particular between about 0.3° to about 5°.

In some embodiments, the first angle $\alpha_1$ may be between about 0.1° to about 5°, more specifically between about 0.1° to about 2°, and in particular between about 0.1° to about 1.5°.

In some embodiments, the first angle $\alpha_1$ may be between about 0.1° to about 5°, more specifically between about 0.2° to about 2° and in particular between about 0.3° to about 1.5°.

In some embodiments, the second angle $\alpha_2$ may be less than 45°, 35°, 30°, 20°, 15°, 10°, 9°, 8°, 7°, 6°, 5°, 4°, 3°, 2° or 1°.

In some embodiments, the second angle $\alpha_2$ may be between about 0.1 to about 45°, more specifically between about 0.2°and 20° and in particular between about 0.3 to about 10°.

In some embodiments, it may be particularly advantageous that the second angle $\alpha_2$ may be less than 20°, 15°, 10°, 9°, 8°, 7°, 6°, 5°, 4°, 3°, 2° or 1°, in particular the second angle $\alpha_2$ may be between about 0.1 to about 20°, more specifically between about 0.2°and 10° and in particular between about 0.3 to about 5°.

In some embodiments, the second angle $\alpha_2$ may be between about 0.1° to about 5°, more specifically between about 0.1° to about 2° and in particular between about 0.1° to about 1.5°.

In some embodiments, the second angle $\alpha_2$ may be between about 0.1° to about 5°, more specifically between about 0.2° to about 2° and in particular between about 0.3° to about 1.5°.

In some embodiments, the first angle $\alpha_1$ may be less than 45°, 35°, 30°, 20°, 15°, 10°, 9°, 8°, 7°, 6°, 5°, 4°, 3°, 2° or 1°; and the second angle $\alpha_2$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1° to about 45° more specifically between about 0.2°and 20° and in particular between about 0.3° to about 10°; and the second angle $\alpha_2$ may be between about 0.1° to about 45°, more specifically between about 0.2° and in particular between about 0.3° to about 10°.

In some embodiments, it may be particularly advantageous that the first angle $\alpha_1$ may be less 20°, 15°, 10°, 9°, 8°, 7°, 6°, 5°, 4°, 3°, 2° or 1°, in particular the first angle $\alpha_1$ may be between about 0.1° to about 20°, more specifically between about 0.2°and 10° and in particular between about 0.3° to about 5°; and the second angle $\alpha_2$ may be less than 20°, 15°, 10°, 9°, 8°, 7°, 6°, 5°, 4°, 3°, 2° or 1°, in particular the second angle $\alpha_2$ may be between about 0.1° to about 20°, more specifically between about 0.2°and 10° and in particular between about 0.3° to about 5°.

In some embodiments, the first angle $\alpha_1$ may be between about 0.1° to about 5°, more specifically between about 0.1° to about 2° and in particular between about 0.1° to about 1.5°; and the second angle $\alpha_2$ may be between about 0.1° to about 5°, more specifically between about 0.1° to about 2° and in particular between about 0.1° to about 1.5°.

In some embodiments, the first angle $\alpha_1$ may be between about 0.1° to about 5°, more specifically between about 0.2° to about 2° and in particular between about 0.3° to about 1.5°; and the second angle $\alpha_2$ may be between about 0.1° to about 5°, more specifically between about 0.2° to about 2° and in particular between about 0.3° to about 1.5°.

In some embodiments, the first angle $\alpha_1$ may be between about 0.1° to about 5°, more specifically between about 0.2° to about 2° and in particular between about 0.3° to about 1.5°; and the second angle $\alpha_2$ may be between about 0.1° to about 5°, more specifically between about 0.2° to about 2° and in particular between about 0.3° to about 1.5°.

In some embodiments, the second cross-sectional area is the third cross-sectional area.

In some embodiments, the graphitization furnace may be a continuous graphitization furnace or a semi-batch graphitization furnace, and in particular a continuous graphitization furnace. In some embodiments, the graphitization furnace may be configured such that material flow in the graphitization furnace is gravity assisted.

In some embodiments, the upstream section and/or downstream section may comprise or consist of graphite.

In some embodiments, a cross-section, (perpendicular to a central-channel-axis) of the upstream section or downstream section may be circular, elliptical or polygonal, more specifically octagonal, hexagonal, rectangular, square, or elliptical, and in particular rectangular or elliptical.

In some embodiments, wherein the cross-section of the upstream section or downstream section is polygonal, the corners of the polygon are rounded.

In some embodiments, the graphitization furnace may comprise a stirrer, wherein the stirrer extends at least partially into the channel, more specifically into the downstream section.

In a second aspect, the present disclosure relates to a method of using a graphitization furnace according to any preceding claim for preparing graphite from carbonaceous material.

**Brief Description of the Figures**

> **Fig. 1** shows a cross-section of a channel 100 comprising a straight upstream section 110 and a straight downstream section 120.

> **Fig. 2** shows a cross-section of a channel 100 comprising a straight upstream section 110 and a curved downstream section 120.

> **Fig. 3** shows an isometric view of a channel 100 comprising a straight upstream section 110 and a straight downstream section 120 and a rectangular perimeter.

**Detailed Description**

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

As stated above, artificial graphite may be produced by heating carbonaceous starting materials, such as coke and/or pitch, to temperatures of about 3000 °C under exclusion of oxygen. The starting material typically comprises non-crystalline carbon, which is transformed to graphite, due to the heat. An important property of graphite is its degree of crystallinity. A higher crystallinity may result for example in a higher maximal specific capacity when used in a battery.

The term "graphite" is well known and attributed its common meaning in the art. More specifically, the term "graphite" may refer to a material comprising crystalline carbon in a hexagonal structure. Alternatively or additionally, the term "graphite" may refer to a material comprising at least about 60 %, more specifically at least about 80 % and in particular at least about 83 % crystalline carbon in a hexagonal structure. Alternatively or additionally, the term "graphite" may refer to a material with a graphitization degree of at least about 46 %, more specifically 69 %, even more specifically at least about 80 % and in particular at least about 83 %.

The crystallinity of a graphite may be described via its graphitization degree which may be measured by X-ray diffraction (XRD). The crystalline carbon in the graphite forms a plurality of honeycomb lattices. The distance between the plurality of honeycomb lattices is described by the parameter "interplane distance $d_{002}$. XRD may be used to measure the interplane distance $d_{001}$ between the plurality of lattices. An interplane distance $d_{002}$ of 0.3440 nm corresponds to the interplane distance of turbostratic graphite and an interplane distance of 0.3354 nm corresponds to the interplane distance in a perfect graphite crystal.

The interplane distance may be used to calculate the graphitization degree by the following formula:

$$Graphitization\ Degree = \frac{0.3440nm - d_{002}}{0.3440nm - 0.3354nm}$$

A higher graphitization degree may correspond to a higher maximum discharge capacity.

Heat treatment of the carbonaceous material may be performed in a continuous furnace, i.e. a furnace which is configured for a continuous or semi-continuous production of graphite. For example, carbonaceous raw material may be conveyed along a channel 100 between a raw material inlet and a product outlet, while being heated. The carbonaceous raw material may be in any form, for instance in powder form or granulated, more specifically in powder form.

However, it has been found that the carbonaceous material may cake in sections of the channel 100. In particular, the caking may occur in sections closer to the product outlet. The channel 100 may be arranged vertically between a material inlet at the top and an outlet at the bottom. As a result, the carbonaceous material may form a material column, wherein the carbonaceous material at the bottom of the material column, e.g. close to the product outlet, is compressed by the carbonaceous material disposed above it. The compression may significantly increase the material's propensity for caking.

This caking may also result in a reduced flowability of the carbonaceous material which may result in an impaired material flow. In particular the reduced flowability may result in an impeded discharge of the carbonaceous material from the product outlet. Additionally, the caking and/or reduced flowability may lead to inhomogeneities in the conveyed carbonaceous material. For example, the caking and/or reduced flowability may lead to an inhomogeneous temperature distribution in the carbonaceous material disposed in the graphitization furnace. These inhomogeneities may, in turn, result in a reduced product quality, e.g. a reduced degree of graphitization or inhomogeneous degree of graphitization. Furthermore, the caking may also lead to the product discharged from the graphitization furnace to comprise agglomerates, which may reduce the product quality or require post-processing to break-up the agglomerates.

It has been found that the transport of carbonaceous material prone to caking may be improved by providing a channel section with a diameter increasing in the material transport direction and an additional channel section wherein the diameter increases even further. The product obtainable from such a furnace may be endowed with superior product quality, rendering it particularly suitable for use as anode material, in particular anode material for lithium batteries.

Accordingly, in a first aspect, the present disclosure relates to a graphitization furnace comprising a raw material inlet and a product outlet. Further, the graphitization furnace comprises a channel 100 connecting the raw material inlet and the product outlet, wherein the channel 100 comprises an upstream section 110 and a downstream section 120. The upstream section 110 has a first cross-sectional area closer to the raw material inlet and second cross-sectional area closer to the product outlet and the downstream section 120 has a third cross-sectional area closer to the raw material inlet and fourth cross-sectional area closer to the product outlet. Herein, the second cross-sectional area section is larger than the first cross-sectional area and the fourth cross-sectional area is larger than the second and third cross-sectional area.

The terms upstream and downstream as used herein have their typical meaning in the art, wherein upstream refers to a section closer to the raw material inlet and downstream referring to a section closer to the product outlet.

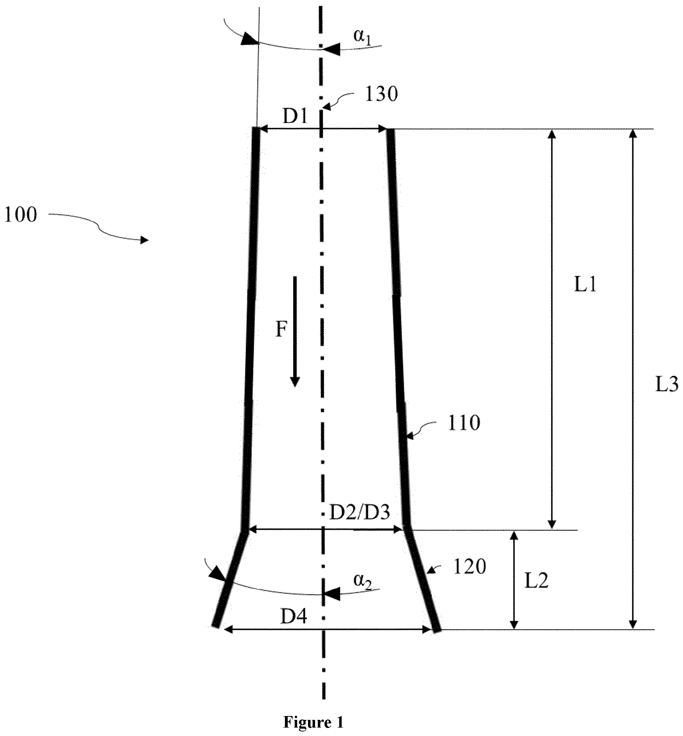

Figure 1 shows an example of a channel 100 comprising a central-channel-axis 130. The central-channel-axis 130 may correspond to the material flow direction F. As depicted in Figure 1, the upstream section 110 may have a first length L1 parallel to the central-channel-axis 130. Alternatively, the first length L1 may be the length between the first cross-sectional area and the second cross-sectional area parallel to the central-channel-axis 130. The downstream section 120 may have a second length L2 parallel to the central-channel-axis 130. The length L2 may be measured between the third cross-sectional area and the fourth cross-sectional area.

Further, the upstream section 110 and the downstream section 120 may have an aggregate third length L3 parallel to the central-channel-axis 130. Alternatively, the length L3 may be the length between the first cross-sectional area and the fourth cross-sectional area parallel to the central-channel-axis 130.

The method of measuring L1, L2 and L3 is not particularly limited. For instance, the first length may be determined by measuring the length of the central-channel-axis 130 between the first cross-sectional area and the second cross-sectional area. Alternatively, the first length L1 may be determined by measuring the distance between the geometric center of the first cross-sectional area and the second cross-sectional area. Analogously, the second length L2 may be determined by measuring the distance between the geometric center of the third cross-sectional area and the fourth cross-sectional area and the third length L3 by measuring the distance between the geometric center of the first cross-sectional area and the fourth cross-sectional area. Alternatively, L1 and L2 may be determined on basis of a cross-section of the channel. In this case, the distance from the intersections of the central-channel-axis 130 with the third and fourth cross-sectional area represents L2 and the distance of the intersections of the central-channel-axis 130 with the first and second cross-sectional area represents L1. Analogously, the third length L3 may be the distance from the intersections of the central-channel-axis 130 with the first and fourth cross-sectional area.

Moreover, the central-channel-axis 130 is not necessarily straight. For example, if the channel 100 is curved, the central-channel-axis 130 may also be curved. In this case, L1 and L2 may be measured by determining the geometric centers of a plurality of cross-sectional areas along the channel 100 and summing up the individual distances between the geometric centers being disposed within the upstream and downstream section, respectively.

Further, as depicted in Figure 1, the channel 100 may have a first inner diameter D1 in the plane of the first-cross-sectional area. Accordingly, and as depicted in Figure 1, the channel 100 may have a second D2, third D3 and fourth D4 inner diameter in the plane of the second, third and fourth cross-sectional area respectively. In some embodiments, the cross-section (perpendicular to the central-channel-axis 130) of the upstream section 110 or downstream section 120 may be elliptical or polygonal, more specifically octagonal, hexagonal, rectangular, square, or elliptical, and in particular rectangular or elliptical. For circular cross-sections, the diameters D1 to D4 are the respective inner diameters in the corresponding plane of the first to fourth cross-sectional area. The skilled person knows how to determine a diameter, but in case of doubt, the diameter should refer to the maximum diameter in a plane. For example, in the case of a square cross-section, the diagonal length in the cross-sectional area's plane may be regarded as the respective diameter of the square.

In some embodiments, wherein the cross-section of the upstream section or downstream section is polygonal, the corners of the polygon are rounded.

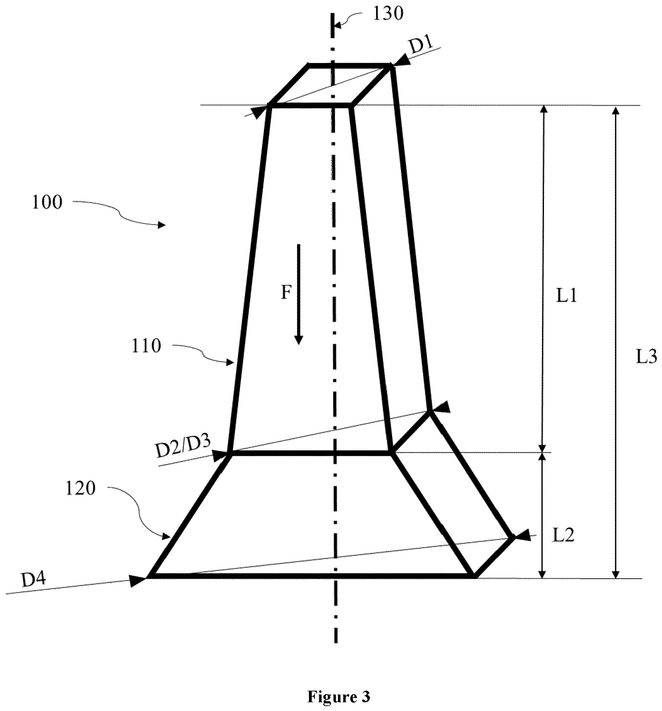

In a channel 100 having a rectangular or square cross-section (perpendicular to the central-channel-axis 130), not all wall sections of the channel 100 need to be angled radially outward (in the material flow direction F and relative to the central-channel-axis 130), to achieve a widening cross-sectional area. For example, as depicted in Figure 3, the channel 100 may comprise two wall sections which are aligned parallel to the central-channel-axis 130 and two wall sections disposed at an angle relative to the central-channel-axis 130.

Here and elsewhere, the term "wall section" refers to a part of channel's 100 wall, more specifically to a part of the wall with a length of at least 5 cm, more specifically at least 10 cm. In particular the term "wall section" may refer to a part of wall with a length of at least 5 cm, in particular at least 10 cm, and a width of at least 10 cm. The width and length may also be measured along a curved wall segment, along the curved surface. For example, within a channel 100 with a square cross-section, a wall section may be one side of the downstream section 120.

As mentioned above, in particular in the section disposed closest to the product outlet, e.g. in the downstream section 120, the risk of caking may be the highest. In particular, the graphitization furnace may be a vertical graphitization furnace, wherein the carbonaceous material forms a material column. As previously described, in the section closest to the product outlet the carbonaceous material's temperature may be the lowest and the compressive force of the material column may be the highest. Furthermore, a conveying means may be disposed close to the product outlet which may introduce further forces to the carbonaceous material, which may further increase the risk of caking. Accordingly, the downstream section 120 may be disposed at a greater angle (or greater radially outward inclination) relative to the central-channel-axis 130 compared to the upstream section 110. Accordingly, in some embodiments, $\frac{(D4-D3)}{L2}$ may be greater than $\frac{D2-D1}{L1}$.

The geometry of the channel 100 may also be defined by angles between central-channel-axis 130 and the inner side of the upstream section 110 or downstream section 120. Accordingly, a first angle $\alpha_1$ may be defined as

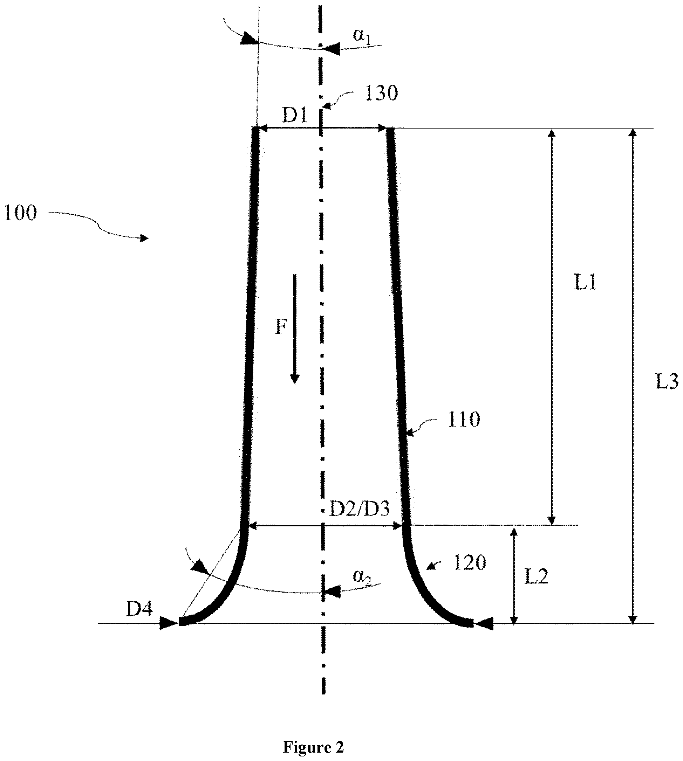

$$\alpha_1 = \arctan\left(\frac{D2-D1}{2*L1}\right)$$ and a second angle $\alpha_2$ may be defined as $$\alpha_2 = \arctan\left(\frac{D4-D3}{2*L2}\right)$$. In some embodiments, $\alpha_2$ may be greater than $a_1$. The first angle $\alpha_1$ and the second angle $\alpha_2$ are depicted Figure 1 and Figure 2.

In some embodiments, the first angle $\alpha_1$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1 to about 45°, more specifically between about 0.2° and 20° and in particular between about 0.3 to about 10°.

In some embodiments, it may be particularly advantageous that the first angle $\alpha_1$ may be less than 20°, 15°, 10°, 9°, 8°, 7°, 6°, 5°, 4°, 3°, 2° or 1°, in particular the first angle $\alpha_1$ may be between about 0.1 to about 20°, more specifically between about 0.2° and 10° and in particular between about 0.3 to about 5°.

In some embodiments, the first angle $\alpha_1$ may be between about 0.1° to about 5°, more specifically between about 0.1° to about 2° and in particular between about 0.1° to about 1.5°.

In some embodiments, the first angle $\alpha_1$ may be between about 0.1° to about 5°, more specifically between about 0.2° to about 2° and in particular between about 0.3° to about 1.5°.

In some embodiments, the second angle $\alpha_2$ may be less than 45°, 35°, 30°, 20°, 15°, 10°, 9°, 8°, 7°, 6°, 5°, 4°, 3°, 2° or 1°.

In some embodiments, the second angle $\alpha_2$ may be between about 0.1 to about 45°, more specifically between about 0.2° and 20° and in particular between about 0.3 to about 10°.

In some embodiments, it may be particularly advantageous that the second angle $\alpha_2$ may be less than 20°, 15°, 10°, 9°, 8°, 7°, 6°, 5°, 4°, 3°, 2° or 1°, in particular the second angle $\alpha_2$ may be between about 0.1 to about 20°, more specifically between about 0.2° and 10° and in particular between about 0.3 to about 5°.

In some embodiments, the second angle $\alpha_2$ may be between about 0.1° to about 5°, more specifically between about 0.1° to about 2° and in particular between about 0.1° to about 1.5°.

In some embodiments, the second angle $\alpha_2$ may be between about 0.1° to about 5°, more specifically between about 0.2° to about 2° and in particular between about 0.3° to about 1.5°.

In some embodiments, the first angle $\alpha_1$ may be less than 45°, 35°, 30°, 20°, 15°, 10°, 9°, 8°, 7°, 6°, 5°, 4°, 3°, 2° or 1°; and the second angle $\alpha_2$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1 to about 45°, more specifically between about 0.2°and 20° and in particular between about 0.3 to about 10°; and the second angle $\alpha_2$ may be between about 0.1 to about 45°, more specifically between about 0.2°and 20° and in particular between about 0.3 to about 10°.

In some embodiments, it may be particularly advantageous that the first angle $\alpha_1$ may be less than 20°, 15°, 10°, 9°, 8°, 7°, 6°, 5°, 4°, 3°, 2° or 1°, in particular the first angle $\alpha_1$ may be between about 0.1 to about 20°, more specifically between about 0.2°and 10° and in particular between about 0.3 to about 5°; and the second angle $\alpha_2$ may be less than 20°, 15°, 10°, 9°, 8°, 7°, 6°, 5°, 4°, 3°, 2° or 1°, in particular the second angle $\alpha_2$ may be between about 0.1 to about 20°, more specifically between about 0.2°and 10° and in particular between about 0.3 to about 5°.

As mentioned above, it has been found that the transport of carbonaceous material prone to caking may be improved by providing a channel section with a diameter increasing in the material transport direction and an additional channel section wherein the diameter increases even further. However, the increase in diameter also results in an increased space requirement for the graphitization furnace. After diligent research, it has been found, that in general, if the angles $\alpha_1$ and $\alpha_2$ are below 10° but above 0.1°, a sufficient material flow can still be ensured. In particular, if the angles $\alpha_1$ and $\alpha_2$ are between about 0.1° and 5° the material flow may still be sufficient while at the same time resulting in minimal space requirements.

In some embodiments, the first angle $\alpha_1$ may be between about 0.1° to about 5°, more specifically between about 0.1° to about 2° and in particular between about 0.1° to about 1.5°; and the second angle $\alpha_2$ may be between about 0.1° to about 5°, more specifically between about 0.1° to about 2° and in particular between about 0.1° to about 1.5°.

In some embodiments, the first angle $\alpha_1$ may be between about 0.1° to about 5°, more specifically between about 0.2° to about 2° and in particular between about 0.3° to about 1.5°; and the second angle $\alpha_2$ may be between about 0.1° to about 5°, more specifically between about 0.2° to about 2° and in particular between about 0.3° to about 1.5°.

In some embodiments, the first angle $\alpha_1$ may be between about 0.1° to about 5°, more specifically between about 0.2° to about 2° and in particular between about 0.3° to about 1.5°; and the second angle $\alpha_2$ may be between about 0.1° to about 5°, more specifically between about 0.2° to about 2° and in particular between about 0.3° to about 1.5°.

In some embodiments, the channel 100 may comprise a heating zone, a high temperature reaction zone and a cooling zone. The heating zone may be characterized by the temperature of the carbonaceous material increasing in flow direction when the graphitization furnace is used. The high temperature reaction zone may be characterized by the carbonaceous material having a temperature of at least 80% of the maximum temperature achieved in the graphitization furnace. The cooling zone may be characterized by the temperature of the carbonaceous material decreasing in flow direction when the graphitization furnace is used. The downstream section 120 may be disposed in the high temperature reaction zone and/or the cooling zone, in particular the cooling zone. As mentioned above, the carbonaceous material may be in particular prone to caking where the pressure on the carbonaceous material is the highest. As the cooling zone is typically arranged the lowest in a vertical graphitization oven increasing the diameter of the downstream section 120 may be in particular expedient in the cooling zone to prevent caking.

In some embodiments, the graphitization furnace may be a vertical graphitization furnace. In some embodiments, the graphitization furnace may be a vertical graphitization furnace and the downstream section may be provided in the lower third, the lower fourth, the lower fifth or the lower sixth of the channel, more specifically the lower fifth or lower sixth of the channel, and in particular in the lower fifth of the channel, wherein lower means closer to the gravitational center of the earth. In some embodiments, the upstream section may be provided in the lower half, the lower third, the lower fourth or the lower fifth of the channel, more specifically the lower fifth or lower sixth of the channel, and in particular in the lower fifth of the channel, wherein lower means closer to the gravitational center of the earth.

In some embodiments, the graphitization furnace may be a vertical graphitization furnace and the downstream section may be provided in the lower third, the lower fourth, the lower fifth or the lower sixth of the channel, more specifically the lower fifth or lower sixth of the channel, and in particular in the lower fifth of the channel; and the upstream section may be provided in the lower half, the lower third, the lower fourth or the lower fifth of the channel, more specifically the lower fifth or lower sixth of the channel, and in particular in the lower fifth of the channel, wherein lower means closer to the gravitational center of the earth. Therefore, the widening of the channel 100 may be limited to its lower end.

Furthermore, in some embodiments, the ratio of L2/L3 may be smaller than 0.5, more specifically smaller than 0.3 and in particular smaller than 0.2. Additionally or alternatively, the ratio of L2/L3 may be between about 0.03 to about 0.5, more specifically 0.05 to about 0.3 and in particular between about 0.1 to about 0. 2. Hence, the length of the downstream section 120 may be significantly shorter compared to that of the upstream section 110. While the significant widening of the downstream section 120 may improve the flowability, the increased diameter may result in an increased space requirement of the graphitization furnace in general for a downstream section 120 of high length.

In some embodiments, a cross-section (in plane with the central-channel-axis 130) of a wall section of the upstream section 110 and/or a wall section of the downstream section 120 may be straight or curved, in particular straight. In Figure 2, the upstream section 110 is depicted as comprising two straight wall sections and the downstream section 120 as comprising two curved cross-sections. The two curved cross-section shown in Figure 2 are concave, but these may also be convex or show an irregular curvature.

In some embodiments, the upstream section and the downstream section are spaced apart or adjoining, in particular adjoining. In some embodiments, the second cross-sectional area is the third cross-sectional area. Hence the downstream section 120 and the upstream section 110 may be directly connected.

In some embodiments, between the upstream section 110 and the downstream section 120 an edge-like or arched transition feature may be disposed. Such transition features may be an (abrupt or gradual) change in the cross-sectional diameters of the upstream section 110 to the downstream 120 and can be provided for a variety of purposes, such as constructive needs or reducing the chance of material agglomerating at the junction of the upstream section 110 and the downstream section 120. The structure of the transition features is not particularly limited and it can be as simple as an edge or a curved widening of the channel.

Furthermore, the extent of the cross-sectional area may not decline between the first cross-sectional area and the second cross-sectional area and/or between the third cross-sectional area and the fourth cross-sectional area. Accordingly, the upstream section and/or downstream section may not be tubular and not be tapered in the material flow direction F. In some embodiments, the cross-sectional area may continuously increase between the first cross-sectional area and the second cross-sectional area and/or between the third cross-sectional area and the fourth cross-sectional area.

In some embodiments, the graphitization furnace may be a continuous graphitization furnace or a semi-batch graphitization furnace, and in particular continuous graphitization furnace. In some embodiments, the material flow in the graphitization furnace, in particular the vertical graphitization furnace, may be gravity assisted. While the material flow may be gravity assisted, the graphitization furnace, in particular the channel 100, may include conveying means, for example to control the rate of material flow and/or discharge from the product outlet.

The graphitization furnace is configured to withstand temperatures inside at least in parts of the channel of at least 3000 °C. More specifically, the graphitization furnace may be configured to withstand temperatures inside at least in parts of the channel of up to 3500 °C.

In some embodiments, the upstream section 110 and/or downstream section 120 may comprise or consist of graphite. Graphite may endure temperatures greater than 3000 °C and may exhibit good mechanical properties. Further, graphite may exhibit a high thermal conductivity, accordingly a channel 100 comprising or consisting of graphite may exhibit a high thermal conductivity. For example, the channel 100 may be heated by an external heating element and conduct the heat to the carbonaceous material disposed within it. The heating element may be disposed around or adjacent to the channel's 100 outer perimeter. In particular, the heating element may be disposed around or adjacent to the heating zone and/or high temperature reaction zone.

Additionally, graphite may be used as a heating element. For example, a current may be applied to a section of the channel 100 comprising or consisting of graphite. The current, or electrical energy, may then be converted to thermal energy. The channel 100 itself may therefore heat the carbonaceous material disposed therein. Alternatively, graphite may be used as an electrode to apply a current to the carbonaceous material. Accordingly, in some embodiments, at least a portion of the channel 100 comprising or consisting of graphite may be a heating element or electrode.

In some embodiments, the channel 100 may comprise carbon fiber reinforced carbon, CFRC, more specifically the channel 100 may comprise at least about 90 wt.-% CFRC and in particular the carbonaceous substrate may comprise at least about 95 wt.-% CFRC, relative to the total weight of the channel 100. CFRC may exhibit improved mechanical properties compared to other carbonaceous materials. Further, CRFC is also resistant to high temperatures. The term "CFRC" is well known and attributed its common meaning in the art. More specifically, the term "CFRC" may refer to a composite material comprising carbon fibers in a matrix of carbon. In particular, the term "CFRC" may refer to a composite material consisting of carbon fibers in a matrix of carbon. CFRC may also be used as a heating element, or as an electrode to apply current to the carbonaceous material. Accordingly, in some embodiments, at least a portion of the channel 100 comprising or consisting of CFRC may be a heating element or electrode.

In some embodiments, the graphitization furnace may comprise a stirrer, wherein the stirrer extends at least partially into the channel 100, more specifically into the downstream section 120. The stirrer may aid in preventing caking of the carbonaceous carbon and/or aid in discharging material from the product outlet. The stirrer may comprise a plurality of mixing paddles. In some embodiments, the stirrer may comprise a first mixing paddle disposed in the downstream section and a second mixing paddle disposed within the upstream section, wherein a first diameter of the first mixing paddle is greater compared to a second diameter of a second mixing paddle.

In a second aspect, the present disclosure relates to a method of using a graphitization furnace according to any preceding embodiment for preparing graphite from a carbonaceous raw material.

In some embodiments, the method may yield graphite having a graphitization degree of at least about 46 %, more specifically 69 %, even more specifically at least about 80 % and in particular at least about 83 %.

In some embodiments, the method may yield graphite, which is suitable for use as anode material, in particular anode material for lithium batteries.

In some embodiments, the method further comprises the step of manufacturing an anode for lithium batteries using the graphite yielded from (continuously) operating the graphitization furnace.

Although the present invention is defined in the attached claims, it should be understood that the present invention can also (alternatively) be defined in accordance with the following embodiments:

1. A graphitization furnace comprising:

a raw material inlet and a product outlet and
a channel (100) connecting the raw material inlet and the product outlet,
wherein the channel (100) comprises an upstream section (110) and a downstream section (120),
wherein the upstream section (110) has a first cross-sectional area closer to the raw material inlet and a second cross-sectional area closer to the product outlet,
wherein the downstream section (120) has a third cross-sectional area closer to the raw material inlet and fourth cross-sectional area closer to the product outlet,
wherein the second cross-sectional area section is larger than the first cross-sectional area, and wherein the fourth cross-sectional area is larger than the second and third cross-sectional area.

2. The graphitization furnace according to embodiment 1, wherein the upstream section (110) and the downstream section (120) are spaced apart or adjoining, in particular adjoining.

3. The graphitization furnace according to any preceding embodiment, wherein between the upstream section (110) and the downstream section (120) an edge-like or arched transition feature is disposed.

4. The graphitization furnace according to any preceding embodiment, wherein the graphitization furnace is a vertical graphitization furnace.

5. The graphitization furnace according to any preceding embodiment, wherein the graphitization furnace is a vertical graphitization furnace and the downstream section (120) is provided in the lower third, the lower fourth, the lower fifth or the lower sixth of the channel (100), more specifically the lower fifth or lower sixth of the channel (100), and in particular in the lower fifth of the channel (100), wherein lower means closer to the gravitational center of the earth.

6. The graphitization furnace according to any preceding embodiment, wherein the upstream section (110) is provided in the lower half, the lower third, the lower fourth or the lower fifth of the channel (100), more specifically the lower fifth or lower sixth of the channel (100), and in particular in the lower fifth of the channel (100), wherein lower means closer to the gravitational center of the earth.

7. The graphitization furnace according to any preceding embodiment, wherein the graphitization furnace is a vertical graphitization furnace and the downstream section (120) is provided in the lower third, the lower fourth, the lower fifth or the lower sixth of the channel (100), more specifically the lower fifth or lower sixth of the channel (100), and in particular in the lower fifth of the channel (100); and the upstream section (110) is provided in the lower half, the lower third, the lower fourth or the lower fifth of the channel (100), more specifically the lower fifth or lower sixth of the channel (100), and in particular in the lower fifth of the channel (100), wherein lower means closer to the gravitational center of the earth.

8. The graphitization furnace according to any preceding embodiment, wherein the channel (100) comprises a heating zone, a high temperature reaction zone and a cooling zone.

9. The graphitization furnace according to embodiment 8, wherein the downstream section (120) is disposed in the high temperature reaction zone and/or the cooling zone, in particular the cooling zone.

10. The graphitization furnace according to any preceding embodiment, wherein the upstream section (110) has a first length L1 and the downstream section (120) has a second length L2, more specifically the upstream section (110) and the downstream section (120) are adjoining and the upstream section (110) and downstream section (120) have a combined length L3, wherein the ratio L2/L3 is smaller than 0.5, more specifically smaller than 0.3 and in particular smaller than 0.2.

11. The graphitization furnace according to embodiment 10, wherein the ratio of L2/L3 is between about 0.03 to about 0.5, more specifically 0.05 to about 0.3 and in particular between about 0.1 to about 0.2.upstream section (110)downstream section (120)downstream section (120)downstream section (120).

12. The graphitization furnace according to any embodiment 10 or 11, wherein the channel (100) has a first inner diameter D1, a second inner diameter D2, a third inner diameter D3 and a fourth inner diameter D4 in the plane of the first, second, third and fourth cross-sectional area respectively, wherein the inner diameters meet the requirement

$$\frac{(D2-D1)}{L1} < \frac{(D4-D3)}{L2}.$$

13. The graphitization furnace according to any preceding embodiment, wherein the graphitization furnace is a continuous graphitization furnace or a semi-batch graphitization furnace, and in particular a continuous graphitization furnace.

14. The graphitization furnace according to any preceding embodiment, wherein the graphitization furnace is configured such that material flow in the graphitization furnace is gravity assisted.

15. The graphitization furnace according to any one of embodiments 12 to 14, wherein the channel (100) has a first angle $\alpha_1$ defined as meeting the criterion: $\alpha_1 = \arctan\left(\frac{D2-D1}{2*L1}\right)$ and a second angle $\alpha_2$ defined as meeting the criterion: $\alpha_2 = \arctan\left(\frac{D4-D3}{2*L2}\right)$ and wherein $\alpha_1 < \alpha_2$.

16. The graphitization furnace according to embodiment 15, wherein the first angle $\alpha_1$ is less than 45°, 35°, 30°, 20°, 15°, 10°, 9°, 8°, 7°, 6°, 5°, 4°, 3°, 2° or 1°.

17. The graphitization furnace according to embodiment 15 or 16, wherein the first angle $\alpha_1$ is between about 0.1° to about 45°, more specifically between about 0.2°and 20° and in particular between about 0.3° to about 10°.

18. The graphitization furnace according to any one of embodiments 15 to 17, wherein the first angle $\alpha_1$ is less than 20°, 15°, 10°, 9°, 8°, 7°, 6°, 5°, 4°, 3°, 2° or 1°, in particular the first angle $\alpha_1$ is between about 0.1° to about 20°, more specifically between about 0.2°and 10° and in particular between about 0.3° to about 5°.

19. The graphitization furnace according to any one of embodiments 15 to 18, wherein the first angle $\alpha_1$ is between about 0.1° to about 5°, more specifically between about 0.1° to about 2° and in particular between about 0.1° to about 1.5°.

20. The graphitization furnace according to any one of embodiments 15 to 19, wherein the first angle $\alpha_1$ is between about 0.1° to about 5°, more specifically between about 0.2° to about 2° and in particular between about 0.3° to about 1.5°.

21. The graphitization furnace according to any one of embodiments 15 to 20, wherein the second angle $\alpha_2$ is less than 45°, 35°, 30°, 20°, 15°, 10°, 9°, 8°, 7°, 6°, 5°, 4°, 3°, 2° or 1°.

22. The graphitization furnace according to any one of embodiments 15 to 21, wherein the second angle $\alpha_2$ is between about 0.1° to about 45°, more specifically between about 0.2°and 20° and in particular between about 0.3° to about 10°.

23. The graphitization furnace according to any one of embodiments 15 to 22, wherein the second angle $\alpha_2$ is less than 20°, 15°, 10°, 9°, 8°, 7°, 6°, 5°, 4°, 3°, 2° or 1°, in particular the second angle $\alpha_2$ is between about 0.1° to about 20°, more specifically between about 0.2°and 10° and in particular between about 0.3° to about 5°.

24. The graphitization furnace according to any one of embodiments 15 to 23, wherein the second angle $\alpha_2$ is between about 0.1° to about 5°, more specifically between about 0.1° to about 2° and in particular between about 0.1° to about 1.5°.

25. The graphitization furnace according to any one of embodiments 15 to 24, wherein the second angle $\alpha_2$ is between about 0.1° to about 5°, more specifically between about 0.2° to about 2° and in particular between about 0.3° to about 1.5°.

26. The graphitization furnace according to embodiment 25, wherein the first angle $\alpha_1$ is less than 45°, 35°, 30°, 20°, 15°, 10°, 9°, 8°, 7°, 6°, 5°, 4°, 3°, 2° or 1°; and the second angle $\alpha_2$ is less than 45°, 35°, 30°, 20°, 15°, 10°, 9°, 8°, 7°, 6°, 5°, 4°, 3°, 2° or 1°.

27. The graphitization furnace according to embodiment 25 or 26, wherein the first angle $\alpha_1$ is between about 0.1 to about 45°, more specifically between about 0.2°and 20° and in particular between about 0.3° to about 10°; and the second angle $\alpha_2$ is between about 0.1 to about 45°, more specifically between about 0.2°and 20° and in particular between about 0.3° to about 10°.

28. The graphitization furnace according to any one of embodiments 25 to 27, wherein the first angle $\alpha_1$ is less than 20°, 15°, 10°, 9°, 8°, 7°, 6°, 5°, 4°, 3°, 2° or 1°, in particular the first angle $\alpha_1$ is between about 0.1° to about 20°, more specifically between about 0.2°and 10° and in particular between about 0.3° to about 5°; and the second angle $\alpha_2$ is less than 20°, 15°, 10°, 9°, 8°, 7°, 6°, 5°, 4°, 3°, 2° or 1°, in particular the second angle $\alpha_2$ is between about 0.1° to about 20°, more specifically between about 0.2°and 10° and in particular between about 0.3° to about 5°.

29. The graphitization furnace according to any one of embodiments 25 to 28, wherein the first angle $\alpha_1$ is between about 0.1° to about 5°, more specifically between about 0.1° to about 2° and in particular between about 0.1° to about 1.5°; and the second angle $\alpha_2$ is between about 0.1° to about 5°, more specifically between about 0.1° to about 2° and in particular between about 0.1° to about 1.5°.

30. The graphitization furnace according to any one of embodiments 25 to 29, wherein the first angle $\alpha_1$ is between about 0.1° to about 5°, more specifically between about 0.2° to about 2° and in particular between about 0.3° to about 1.5°; and the second angle $\alpha_2$ is between about 0.1° to about 5°, more specifically between about 0.2° to about 2° and in particular between about 0.3° to about 1.5°.

31. The graphitization furnace according to any one of embodiments 25 to 30, wherein the first angle $\alpha_1$ is between about 0.1° to about 5°, more specifically between about 0.2° to about 2° and in particular between about 0.3° to about 1.5°; and the second angle $\alpha_2$ is between about 0.1° to about 5°, more specifically between about 0.2° to about 2° and in particular between about 0.3° to about 1.5°.

32. The graphitization furnace according to any preceding embodiment, wherein the second cross-sectional area is the third cross-sectional area.

33. The graphitization furnace according to any preceding embodiment, wherein the upstream section (110) and/or downstream section (120) comprise or consist of graphite.

34. The graphitization furnace according to any preceding embodiment, wherein a cross-section perpendicular to a central-channel (100)-axis of the upstream section (110) or downstream section (120) is elliptical or polygonal, more specifically octagonal, hexagonal, rectangular, square, or elliptical, and in particular rectangular or elliptical.

35. The graphitization furnace according to any preceding embodiment, wherein the graphitization furnace comprises a stirrer, wherein the stirrer extends at least partially into the channel (100), more specifically into the downstream section (120).

36. Method of using a graphitization furnace according to any preceding embodiment for preparing graphite from carbonaceous material.

**Claims**

1. A graphitization furnace comprising:

   a raw material inlet and a product outlet and
   a channel (100) connecting the raw material inlet and the product outlet,

wherein the channel (100) comprises an upstream section (130) and a downstream section (120),
wherein the upstream section (130) has a first cross-sectional area closer to the raw material inlet and second cross-sectional area closer to the product outlet,
wherein the downstream section (120) has a third cross-sectional area closer to the raw material inlet and fourth cross-sectional area closer to the product outlet,
wherein the second cross-sectional area section is larger than the first cross-sectional area, and wherein the fourth cross-sectional area is larger than the second and third cross-sectional area.

2. The graphitization furnace according claim 1, wherein the upstream section (130) and the downstream section (120) are spaced apart or adjoining, in particular adjoining.

3. The graphitization furnace according to any preceding claim, wherein between the upstream section (130) and the downstream section (120) an edge-like or arched transition feature is disposed.

4. The graphitization furnace according to any preceding claim, wherein the graphitization furnace is a vertical graphitization furnace.

5. The graphitization furnace according to any preceding claim, wherein the graphitization furnace is a vertical graphitization furnace and the downstream section (120) is provided in the lower third, the lower fourth, the lower fifth or the lower sixth of the channel (100), more specifically the lower fifth or lower sixth of the channel (100), and in particular in the lower fifth of the channel (100), wherein lower means closer to the gravitational center of the earth.

6. The graphitization furnace according to any preceding claim, wherein the channel (100) comprises a heating zone, a high temperature reaction zone and a cooling zone, more specifically wherein the downstream section (120) is disposed in the high temperature reaction zone and/or the cooling zone, in particular the cooling zone.

7. The graphitization furnace according to any preceding claim, wherein the upstream section (130) has a first length L1 and the downstream section (120) has a second length L2, wherein the upstream section (130) and the downstream section (120) are adjoining and have a combined length L3, wherein the ratio L2/L3 is smaller than 0.5, more specifically smaller than 0.3 and in particular smaller than 0.2.

8. The graphitization furnace according to any preceding claim, wherein the channel (100) has a first inner diameter D1, a second inner diameter D2, a third inner diameter D3 and a fourth inner diameter D4 in the plane of the first, second, third and fourth cross-sectional area respectively, wherein the inner diameters meet the requirement

$$\frac{(D2-D1)}{L1} < \frac{(D4-D3)}{L2}.$$

9. The graphitization furnace according to any preceding claim, wherein the graphitization furnace is a continuous graphitization furnace or a semi-batch graphitization furnace, and in particular a continuous graphitization furnace.

10. The graphitization furnace according to any preceding claim, wherein the graphitization furnace is configured such that material flow in the graphitization furnace is gravity assisted.

11. The graphitization furnace according to any one of claims 8 to 10, wherein the channel (100) has a first angle $\alpha_1$ defined as meeting the criterion: $\alpha_1 = \arctan\left(\frac{D2-D1}{2*L1}\right)$ and a second angle $\alpha_2$ defined as meeting the criterion: $\alpha_2 = \arctan\left(\frac{D4-D3}{2*L2}\right)$ and wherein $\alpha_1 < \alpha_2$.

12. The graphitization furnace according to claim 11, wherein the second angle $\alpha_2$ is less than 45°, 35°, 30°, 20°, 15°, 10°, 9°, 8°, 7°, 6°, 5°, 4°, 3°, 2° or 1°, in particular wherein the second angle $\alpha_2$ is between about 0.1° to about 45°, more specifically between about 0.2° and 20° and in particular between about 0.3° to about 10°.

13. The graphitization furnace according to claim 11 or 12, wherein the second angle $\alpha_2$ is between about 0.1° to about 5°, more specifically between about 0.1° to about 2° and in particular between about 0.1° to about 1.5°.

**14.** The graphitization furnace according to any preceding claim, wherein a cross-section perpendicular to a central-channel (100)-axis of the upstream section (130) or downstream section (120) is elliptical or polygonal, more specifically octagonal, hexagonal, rectangular, square, or elliptical, and in particular rectangular or elliptical.

**15.** Method of using a graphitization furnace according to any preceding claim for preparing graphite from carbonaceous material.

**Figure 1**

Figure 2

**Figure 3**

Europäisches
Patentamt

European
Patent Office

Office européen
des brevets

# EUROPEAN SEARCH REPORT

Application Number

EP 23 17 0107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 725 906 A (DUISBURGER KUPFERHUETTE) 9 March 1955 (1955-03-09) | 1-14 | INV. C01B32/05 |
| Y | * page 1, line 40 – page 2, line 68; figures 1-7 *  * page 2, line 101 – line 110 *  * the whole document * | 15 | C01B32/205 C04B11/028 C10B3/00 F27B1/10 |
| X | US 3 630 508 A (STOOKEY KENNETH W) 28 December 1971 (1971-12-28) | 1-14 | |
| A | * column 1, lines 8-10, 19-27; figures 1-4 *  * column 4, line 49 – column 5, line 72 *  * column 7, lines 57-64 *  * the whole document * | 15 | |
| Y | US 2022/371898 A1 (MUCK MATTHIAS [DE] ET AL) 24 November 2022 (2022-11-24) | 15 | |
| A | * paragraphs [0001] – [0006], [0041]; figure 1 *  * the whole document * | 1-14 | |

| TECHNICAL FIELDS SEARCHED (IPC) |
|---|
| C01B F27D C10H C04B C10B F27B |

The present search report has been drawn up for all claims

| Place of search | Date of completion of the search | Examiner |
|---|---|---|
| The Hague | 23 October 2023 | Follens, Lana |

EPO FORM 1503 03.82 (P04C01)

## ANNEX TO THE EUROPEAN SEARCH REPORT
## ON EUROPEAN PATENT APPLICATION NO.

EP 23 17 0107

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2023

| Patent document cited in search report | | Publication date | Patent family member(s) | | Publication date |
|---|---|---|---|---|---|
| GB 725906 | A | 09-03-1955 | NONE | | |
| US 3630508 | A | 28-12-1971 | NONE | | |
| US 2022371898 | A1 | 24-11-2022 | CN | 114514196 A | 17-05-2022 |
| | | | DE | 102019126394 A1 | 01-04-2021 |
| | | | EP | 4038017 A1 | 10-08-2022 |
| | | | JP | 2022550405 A | 01-12-2022 |
| | | | KR | 20220071253 A | 31-05-2022 |
| | | | TW | 202124278 A | 01-07-2021 |
| | | | US | 2022371898 A1 | 24-11-2022 |
| | | | WO | 2021063603 A1 | 08-04-2021 |

EPO FORM P0459

For more details about this annex : see Official Journal of the European Patent Office, No. 12/82